# EUROPEAN PATENT APPLICATION

(11) **EP 2 603 025 A1**
(43) Date of publication of application: **12.06.2013**
(21) Application number: 12195722.9
(22) Date of filing: 05.12.2012
(51) Int. Cl.: H04W 12/06, H04W 12/08, H04L 29/06, G06F 21/62

(54) **Apparatus and method for secure storage of private information on a mobile terminal and control of private information transmitted by the mobile terminal**

(30) Priority: 06.12.2011 US 201113311919
(71) Applicant: Samsung Electronics Co., Ltd, Gyeonggi-do 443-742 (KR)
(72) Inventor: Lee, Howard Z, San Jose, CA California 95129 (US)
(74) Representative: Jenkins, Richard Gavin

(57) **Abstract**

A mobile terminal (112) and method for securely storing private information are provided. The mobile terminal (112) includes a cellular band transceiver (501) for transmitting and receiving radio signals in a cellular band, a controller (504) for controlling operations of the mobile terminal (112), and a memory (503) for storing programs used by controller for the controlling of the operations of the mobile terminal (112) and data including the private information, the memory (503) including a secure storage area (505) for storing the private information, and a non-secure storage area for storing the non-private information.

## Description

### BACKGROUND OF THE INVENTION

### 1. Field of the Invention:

The present invention relates to an apparatus and method for secure storage of information on a mobile terminal. More particularly, the present invention relates to an apparatus and method for securely storing private information on the mobile terminal and private transmission of the stored private information over a phone call.

### 2. Description of the Related Art:

Mobile terminals were developed to provide wireless communication between users. As technology has advanced, mobile terminals now provide many additional features beyond simple telephone conversation. For example, mobile terminals are now able to provide additional functions such as an alarm, a Short Messaging Service (SMS), a Multimedia Message Service (MMS), E-mail, games, remote control of short range communication, an image capturing function using a mounted digital camera, a multimedia function for providing audio and video content, a scheduling function, and many other voice and data functions. Due to mobile terminals providing a plurality of features, mobile terminals have become commonly used in daily life to execute transactions involving private user information.

Such transactions or features executing transactions involving private user information or other secure information can be conducted from a variety of locations where a mobile terminal is connected to a cellular network or other wireless networks. However, certain transactions or functions, such as ordering a pizza from a restaurant, conducting a financial transaction with a store, online merchant, or a bank, purchasing media content, such as music or video data files, or mobile terminal applications, or purchasing cellular network services, such as pay-as-you-go minutes, may utilize a user's private information in order to conduct the transaction or execute the function. In order to conduct the transactions or functions, the user may disclose the user's private information, such as the user's social security number, a driver's license number, or credit card number. This information is often conveyed using Dual-Tone Multi-Frequency (DTMF) signaling by the user inputting the number's numerical value in the digits on the phone keypad.

Previous methods and apparatuses used to conduct transactions or execute functions involving the user's private information have utilized external devices that are acoustically coupled to the mobile terminal in order to transmit the user's private information. However, such methods and apparatuses are unwieldy, cause the user to perform extra operations to attach and detach the acoustically coupled external device, and are also susceptible to eavesdropping.

Mobile terminals, or mobile phones, may include applications to automate sending of Dual-Tone Multi-Frequency (DTMF) signaling. For example, the user's credit card information and social security number may be entered and stored on a mobile terminal. The user may execute an application on the mobile terminal to automatically send the credit card information and the social security number to an online merchant or vendor to purchase a good or service by utilizing the credit card number transmitted via the application automating sending of the credit card number using the DTMF signaling. However, the mobile terminals using automated sending of DTMF signaling for the user's private information may not provide security mechanisms, and thus, are also susceptible to eavesdropping or other breaches of security that may result in reading or stealing the user's private information from the mobile terminal. Accordingly, there is a need for an apparatus and method for securely storing private information on the mobile terminal and secure transmission of the private information over a phone call.

### SUMMARY OF THE INVENTION

An aspect of the present invention is to address at least the above-mentioned problems and/or disadvantages and to provide at least the advantages described below. Accordingly, an aspect of the present invention is to provide an apparatus and method for securely storing private information on the mobile apparatus and private transmission of the private information over a phone call.

In accordance with another aspect of the present invention, a mobile terminal for securely storing private information is provided. The mobile terminal includes a cellular band transceiver for transmitting and receiving radio signals in a cellular band, a controller for controlling operations of the mobile terminal, and a memory for storing programs used by controller for the controlling of the operations of the mobile terminal and data including the private information, the memory including a secure storage area for storing the private information, and a non-secure storage area for storing the non-private information.

In accordance with an aspect of the present invention, a method for securely storing and transmitting private information on a mobile terminal is provided. The method includes initiating a phone call on the mobile terminal, determining whether the phone call includes transmission of the private information, locating the private information in a secured memory location, and authenticating a user initiating the phone call including the transmission of the private information.

In accordance with another aspect of the present invention a mobile terminal including a memory for securely storing private information is provided. The memory includes a secure storage area for storing the private information, and a non-secure storage area for storing programs used by a controller for controlling of operations of the mobile terminal and data other than the private information.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 illustrates a wireless network including a mobile terminal according to an exemplary embodiment of the present invention;

FIG. 2 is a flowchart of a method of executing a secure operation using a user's private information according to an exemplary embodiment of the present invention; and

FIG. 3 is a flowchart of a method of transmitting a user's private information according to an exemplary embodiment of the present invention.

FIG. 4 illustrates a mobile terminal providing a secure storage and transmission of a user's private information in a wireless communication system according to an exemplary embodiment of the present invention.

FIG. 5A is a block diagram illustrating a mobile terminal in a wireless communication system according to an exemplary embodiment of the present invention.

FIG. 5B is a block diagram illustrating a memory of the mobile terminal of FIG. 4 according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

The following exemplary embodiments of the present invention are described as applied to a "mobile terminal." However, it is to be understood that this is merely a generic term and that the invention is equally applicable to any of a mobile phone, a palm sized Personal Computer (PC), a Personal Digital Assistant (PDA), a Hand-held PC (HPC), a smart phone, an International Mobile Telecommunication 2000 (IMT-2000) terminal, a wireless Local Area Network (LAN) terminal, and the like. Accordingly, use of the term "mobile terminal" should not be used to limit application of the present inventive concepts to any certain type of apparatus or device.

Exemplary embodiments of the present invention include an apparatus and method for securely storing private information on the mobile apparatus and private transmission of the private information over a phone call. In the exemplary embodiments below, a receiving party of the private transmission of the private information over the phone call may be a human or a computer or machine capable of understanding and processing human language communication. Thus, in the exemplary embodiments below, the phone call may refer to a communication between more than one party via an analog or a digital phone call, a Voice over Internet Protocol (VoIP) call, or other similar methods of transmitting audio that may include live audio, Dual-Tone Multi-Frequency (DTMF) tones, synthesized speech or audio, recorded speech or audio, or other suitable methods of transmitting audible content.

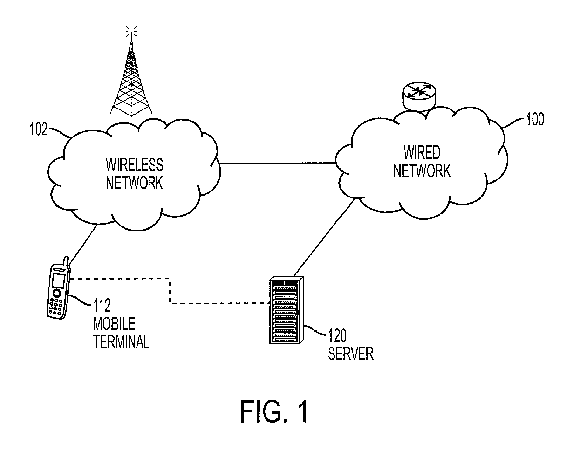

FIG. 1 illustrates a wireless network including a mobile terminal according to an exemplary embodiment of the present invention.

Referring to FIG. 1, a mobile terminal 112 communicates with a server 120 and other voice communication devices and data communication devices through a wireless network 102 and a wired network 100. The other voice communication devices and data communication devices, including the server 120, may include other mobile terminals, cellular communications devices, wired telephones, computer terminals, and other similar electronic devices that communicate via a wired or wireless network. For example, the mobile terminal 112 may make a phone call with another mobile terminal (not shown) or a wired terminal or telephone (not shown) allowing a user of the mobile terminal 112 to talk with another user of the other mobile terminal or the wired terminal or telephone. Alternatively, the mobile terminal 112 may communicate with the server 120 to conduct an operation or execute a function involving private information of the user of the mobile terminal.

In order to conduct the operation or execute the function involving the user's private information, the mobile terminal 112 transmits the user's private information via the wireless network 102. The user's private information may be transmitted over the voice or data channel. The user's private information may include a user's social security number, a credit card number, a bank account number, a Personal Identification Number (PIN), a cell phone service account number, a home address, or other similar information. For example, if a user of the mobile terminal 112 is purchasing an item through a phone call to a retail vendor, the mobile terminal 112 may securely transmit the user's private information over the call, including the user's credit card number, to the retail vendor in order to purchase a service or a good from the retail vendor.

In further detail, if the retail vendor is a bank providing financial and banking services, the user may retrieve bank account information through a phone call to the bank, wherein the user provides the user's private information, such as a home address, social security number, and bank account number, or other similar private information to the bank. According to the present exemplary embodiment, the user may be conducting the phone call in a public environment where the phone conversation is prone to eavesdropping. Furthermore, in a noisy public environment, in which a background noise level may interfere with voice communication over the mobile terminal 112, the user may speak at an elevated volume level in order to clearly and precisely communicate a lengthy string of numbers, such as a Social Security Number (SSN) or a credit card number. In such a case, the user may be reluctant to provide the user's private information to the bank in an audible manner over the phone call because audible recitation of the user's private information in a public environment allows for eavesdropping by third parties.

In order to complete the operation, such as getting bank account information or executing a retail transaction, in a secure manner, the user provides the bank or other party on the voice call with the user's home address and credit card number through the mobile terminal 112 that transmits the information using DTMF tones. The DTMF tones may be used for transmitting numerical values, audible language, and any other type of information that is suitable for being transmitted using DTMF tones via the wireless network 102. Due to the user's home address and credit card number being private information which the user may not want to be publicly accessible, the mobile terminal 112 retrieves the user's private information stored on the mobile terminal 112 in a secure process and transmits the private information DTMF tones that are understandable to automated phone system agents. Furthermore, the mobile terminal 112 retrieves the user's private information after authenticating a current user of the mobile terminal 112 that is executing the retail transaction in order to provide a secure storage of the user's private information.

In order to authenticate the current user of the mobile terminal 112, the mobile terminal 112 may execute one of a variety of authentication procedures. For example, the mobile terminal 112 may display a dialog box on a display apparatus (not shown) of the mobile terminal prompting the current user to select whether to transmit the user's private information. If the current user elects to transmit the user's private information, the mobile terminal may display an authentication dialog box on the display apparatus in order to authenticate the current user before transmitting the user's private information stored on the mobile terminal 112.

The authentication dialog box may prompt the current user to provide a password to the mobile terminal 112. However, the present invention is not limited thereto, and the authentication procedure may involve a variety of sufficiently secure or strong procedures, such as a biometric procedure. Upon the current user being successfully authenticated, the mobile terminal 112 transmits the user's private information to the other party of the phone call, which may be a person or a computer such as the server 120 providing a bank's automated call system in order to complete the operation or the transaction.

The user's private information is transmitted from the mobile terminal 112 to a receiving end user of the phone call in a private manner using the DTMF tones. During the transmission of the user's private information, the information is not audible to a party transmitting the information from the mobile terminal 112, and thus in only audible to the party receiving the user's private information transmitted from the mobile terminal 112. In other words, when a user's private information is transmitted from the mobile terminal 112, it is not audibly played by the mobile terminal 112 such that is it not locally audible. Although the present exemplary embodiment uses DTMF tones transmitted to a party on the receiving end of the phone call, the present invention is not limited thereto, and the user's private information may be sent to a computer, such as the server 120, an automated call system, or to other suitable network destinations as recorded or synthesized audio, as the DTMF tones, or through another encoding method over the phone call.

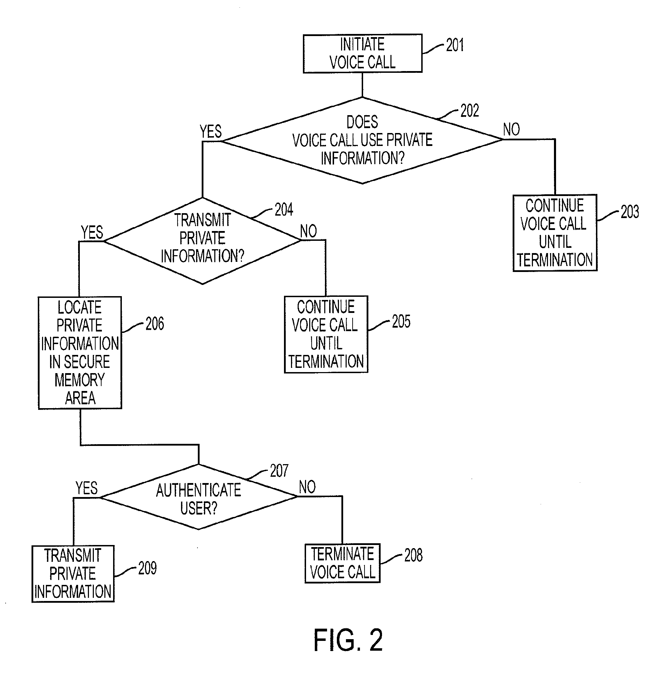

FIG. 2 is a flowchart of a method of executing a secure operation using a user's private information according to an exemplary embodiment of the present invention.

Referring to FIG. 2, in step 201 a user initiates an operation of an application or a phone call on a mobile terminal. In step 202, the mobile terminal determines if a user's private information stored on the mobile terminal is to be transmitted to another terminal in order to execute the operation or a receiving party of the phone call. For example, the mobile terminal may prompt the user via a dialog box displayed on a display apparatus of the mobile terminal. The dialog box may prompt the user to verify that the private information is to be transmitted during the phone call before executing the present phone call. However, the present invention is not limited thereto, and the determination to use the user's private information may done by other suitable methods, such as the user of the mobile terminal electing to transmit the private information to a selected network destination or the user providing the mobile terminal with a predetermined list of third party phone numbers that will receive the user's private information during a phone call. Furthermore, step 202 may be bypassed and the method of executing a secure operation using a user's private information according to another exemplary embodiment of the present invention may be initiated at step 204 discussed below.

If it is determined that the operation does not use the use's the private information in step 202, then the mobile terminal continues the phone call until terminated in step 203. When it is determined in step 202 that the phone call will involve transmission of private information stored on the mobile terminal, the method proceeds to step 204. The mobile terminal prompts the user to verify that the user's private information is to be transmitted at that time via the operation of the application or over the phone call in step 204. In order to prompt the user, the mobile terminal may display a dialog box on a display apparatus of the mobile terminal. However, the present invention is not limited thereto, and other suitable means of prompting the user or verifying that the user's private information is to be transmitted may be used. The mobile terminal terminates the operation or does not send the user's private information at that time in step 205 if the user of the mobile terminal elects to not transmit the user's private information in step 204.

In step 206, the mobile terminal locates the private information in a secured location of a memory of the mobile terminal if the user of the mobile terminal elects to transmit the user's private information in step 204. Then, in step 207, the user executing the transmission of the private information on the mobile terminal is authenticated. In order to authenticate the user, the mobile terminal may display a dialog box on the display screen of the mobile terminal in order to prompt the user to enter in a password allowing for access to the secured location of the memory of the mobile terminal. However, the present invention is not limited thereto, and the user may be authenticated using a variety of other suitable methods, such as a biometric method, voice recognition or other similar methods of authenticating a user.

If the user is not authenticated in step 207, then the mobile terminal proceeds to step 208 in order to terminate the operation or to terminate the phone call. On the other hand, if the user is authenticated in step 207, then the mobile terminal transmits the private information via the application or via the phone call in step 209. The user's private information is transmitted from the mobile terminal via a wireless network to a network destination or the receiving party of the phone call, such as a person, a server hosting a retail website, an online application store, a bank website, other similar websites that utilize the user's private information, or any other suitable party or entity that may receive a phone call.

In the case of the private information being transmitted to the receiving party of the phone call, the user's private information is transmitted in a manner so as to be understood by the receiving party but not easily understood by other parties that may be eavesdropping on, observing, or imposing upon the privacy of the user conducting the phone call. In further detail, according to the present exemplary embodiment, the mobile terminal transmits the user's private information using DTMF tones that are received and decoded by a terminal of the receiving party of the phone call. The DTMF tones are automatically generated without the user of the mobile terminal entering in the corresponding numbers on a keypad or input device of the mobile terminal at the time of the phone call.

In other words, in order for the user to transmit a user's credit card number over the phone call, rather than individually entering each number of the user's credit card number into the mobile terminal keypad or input device, the mobile terminal converts the stored user's private information into DTMF tones to be transmitted to the receiving party during the phone call. Thus, a third party is prevented from observing the user enter the user's private information into the keypad or input device of the mobile terminal. However, the present invention is not limited thereto, and other suitable methods other than DTMF tones using encoded or modulated audible tones may be used to transmit the user's private information.

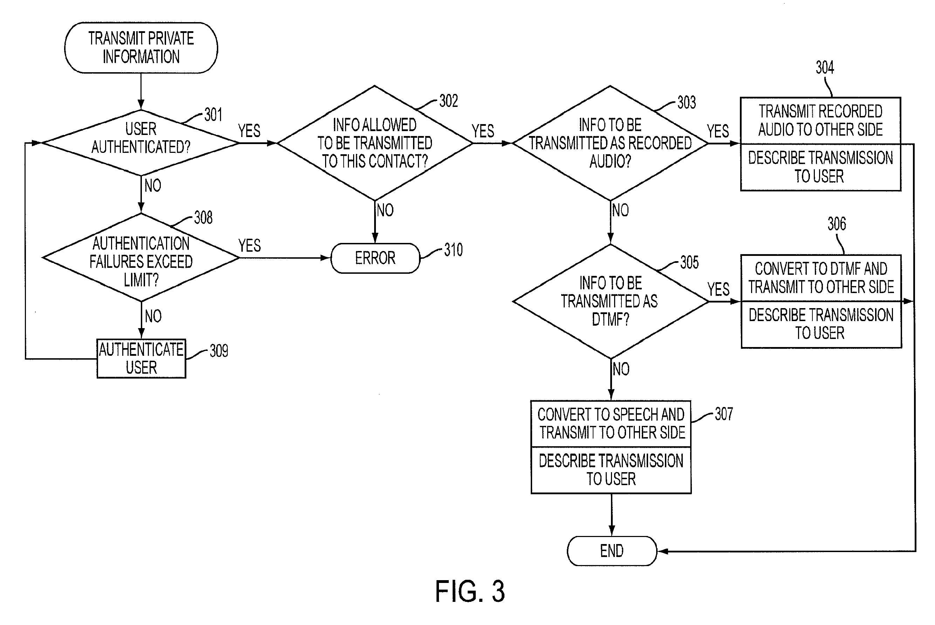

FIG. 3 is a flowchart of a method of transmitting a user's private information according to an exemplary embodiment of the present invention.

Referring to FIG. 3, a method of the user of a mobile terminal transmitting the user's private information to another party of a phone call between the user of the mobile terminal and the other party is shown. In step 301 it is determined whether a user is authenticated. As noted above, with reference to FIG. 1, a user may be authenticated by a variety of suitable means, such as providing a password, a biometric method, voice recognition or other similar methods of authenticating a user.

If the user is not authenticated in step 301, then in step 308, an authentication attempt counter is incremented and it is determined if the authentication attempt counter exceeds a limit. If it is determined, in step 308, that the authentication attempt counter exceeds the limit, then an error is generated in step 310. If the authentication attempt counter is not exceeded in step 308, then, an attempt to authenticate the user is attempted in step 309 and it is determined whether the user is authenticated in step 301.

If the user is authenticated in step 301, then, in step 302, it is determined whether the user's personal information is allowed to be transmitted to the other party of the phone call. In order to determine whether the user's private information is allowed to be transmitted, the user may be prompted to select certain information from the user's private information to be transmitted to the other party. For example, the user may select a SSN and a credit card number to be transmitted to the other party.

The dialog box may prompt the user to verify that the private information is to be transmitted during the phone call before the private information is to be transmitted to the other party. However, the present invention is not limited thereto, and the determination to use the user's private information may be done by other suitable methods. For example, the user of the mobile terminal electing to transmit the private information to a selected phone number or the other party may provide the mobile terminal with a predetermined list of third party phone numbers or other parties that will receive the user's private information during a phone call.

In other words, the user of the mobile terminal may generate a database correlating specific items of information of the user's private information to third party number's or other parties that may receive the specific items of information of the user's private information. Accordingly, by restricting transmission of the user's private information to only predetermined parties, the user's private information may be restricted from being sent to unintended recipients.

If it is determined, in step 302, that the user's private information is not allowed to be transmitted to the other party, then an error is generated in step 310 and the user's private information is not transmitted to the other party. If it is determined, in step 302, that the user's private information is allowed to be transmitted to the other party, then, in step 303, it is determined if the user's private information is to be transmitted as recorded audio. In order to determine if the user's information is to be transmitted as recorded audio, the user may be prompted via a dialog box to choose whether the information is to be transmitted as recorded audio. If it is determined that the user's private information is to be transmitted as recorded audio in step 303, then, in step 304, the user's private information is transmitted to the other part.

Concurrently, in step 304, the transmission of the user's private information to the other party is described to the user without disclosing the content of the user's private information that is transmitted. In other words, rather than audibly conveying the digits of the user's SSN that is transmitted to the other party, the mobile terminal that is transmitting the user's private information may verbally or graphically convey the type of information transmitted without revealing the actual private information. For example, during the transmission of the user's private information to the mobile terminal transmitting the user's private information may display a notification or audibly convey a message stating that the user's SSN is being transmitted while not displaying or audibly reciting the digits of the user's SSN.

In step 303, if it is determined that the user's information is to be not transmitted as recorded audio, then in step 305 it is determined if the user's private information is to be transmitted using DTMF tones. If it is determined that that the user's private information is to be transmitted using the DTMF tones in step 305, then in step 306, the user's private information is converted into DTMF tones and transmitted to the other party. Concurrently, in step 306, the transmission of the user's private information to the other party is described to the user without disclosing the content of the user's private information that is transmitted.

In step 305, if it is determined that the user's private information is not transmitted using the DTMF tones, then, in step 307, the user's private information is converted to speech and transmitted to the other party. Concurrently, in step 307, the transmission of the user's private information to the other party is described to the user without disclosing the content of the user's private information that is transmitted.

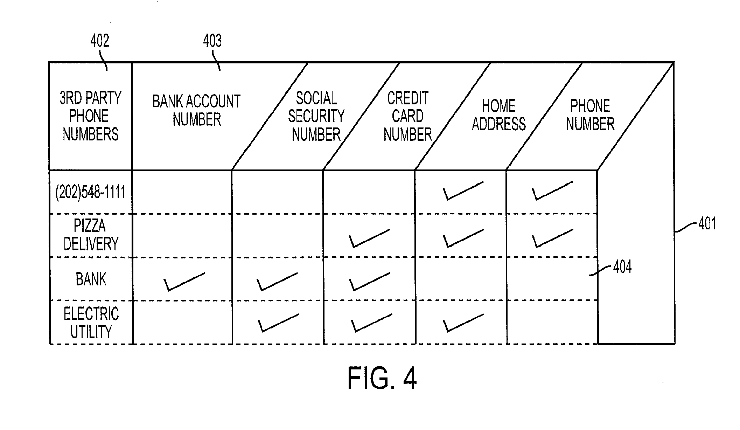

FIG. 4 illustrates a mobile terminal providing a secure storage and transmission of a user's private information in a wireless communication system according to an exemplary embodiment of the present invention.

Referring to FIG. 4, a mobile terminal 400 includes a display apparatus 401 providing a user interface to a user of the mobile terminal 400. According to the present exemplary embodiment, the user may provide the mobile terminal with a predetermined third party phone number list 402 that will receive the user's private information during a phone call. However, the present invention is not limited thereto, and the user may provide any suitable phone number or identifying information for the person or entity that will receive the user's private information during a phone call. The user may then select specific items or fields of a user's private information 403 that are allowed to be transmitted from the mobile terminal 400 to a receiving party of a phone call.

For example, as shown in FIG. 4, the user may select checkboxes 404 allowing the user's home address, phone number and credit card number to be transmitted to a pizza delivery merchant, and may select the checkboxes allowing a user's bank account number, birthday and social security number to be transmitted to a bank. Accordingly, the user's bank account number and social security number are prevented from being transmitted to the pizza delivery merchant, and the user's home address and phone number are prevented from being transmitted to the bank.

The third party phone number list 402 and the respective allowed fields or items of private information allowed to be transmitted to the receiving party of a phone call may be edited by a user through the display screen or an input device of the mobile terminal 400. However, the present invention is not limited thereto, and the mobile terminal may store a database correlating the predetermined list of the third party phone numbers, or any other phone number or identifying information, with certain ones of the user's private information. For example, the database may be created and edited on a separate device, such as a home computer, a portable computer or another similar electronic device, in order to be stored in an encrypted and/or in a manner so as to not be editable via the mobile terminal 400.

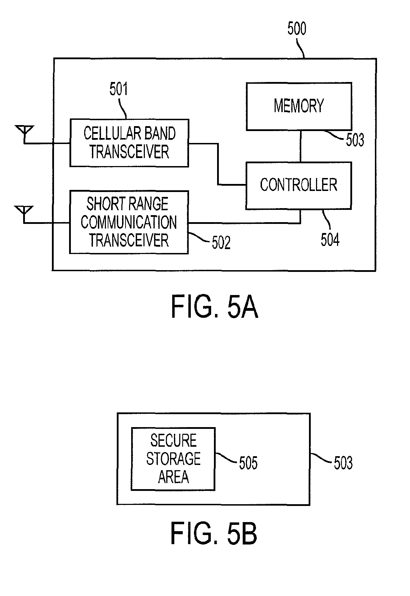

FIG. 5A is a block diagram illustrating a mobile terminal in a wireless communication system according to an exemplary embodiment of the present invention.

Referring to FIG. 5A, a mobile terminal 500 includes a cellular band transceiver 501, a controller 504, and a memory 503. The mobile terminal 500 may include any number of additional structural elements, including short range communication transceiver 502. However, a description of additional structural elements of the mobile terminal 500 is omitted for conciseness. The mobile terminal 500 may be used as the wireless terminal as described with reference to FIGs. 1 and 2.

The cellular band transceiver 501 includes an antenna system, a receiver, and a transmitter that operate in a cellular band. The antenna system is used to transmit signals to and receive signals from the air. The receiver converts a signal in the cellular band received through the antenna system into a baseband signal and demodulates the baseband signal. For example, the receiver may include a Radio Frequency (RF) processing block, a demodulation block, a channel decoding block and the like. The RF processing block converts a signal in the cellular band received through the antenna system into a baseband signal. The demodulation block may be comprised of a Fast Fourier Transform (FFT) operator for extracting data placed on one or more subcarriers of the signal received from the RF processing block and the like. The channel decoding block may comprise a demodulator, a deinterleaver, a channel decoder and the like.

The transmitter converts a baseband signal into a signal in the cellular band and transmits the signal in the cellular band through an antenna system. For example, the transmitter may include a channel encoding block, a modulation block and an RF processing block. The channel encoding block may include a channel encoder, an interleaver, a modulator and the like. The modulation block may comprise an Inverse FFT (IFFT) operator for placing transmitted data on a plurality of orthogonal subcarriers and the like.

In an Orthogonal Frequency Division Multiplexing (OFDM) system, the modulation block may comprise the IFFT operator. In a Code Division Multiple Access (CDMA) system, the IFFT operator may be replaced with a code spreading modulator and the like. The RF processing block converts a baseband signal received from the modulation block into a signal in the cellular band and outputs the signal in the cellular band through the antenna system.

The short range communication transceiver 502 includes an antenna system, a receiver, and a transmitter that operate in the millimeter wave band. The antenna system is used to transmit signals to and receive signals from the air. Herein, the antenna system may form one or more directional beams for communication in the millimeter wave band as described further above. The receiver converts a signal in the millimeter wave band received through the antenna system into a baseband signal and demodulates the baseband signal. For example, the receiver may include an RF processing block, a demodulation block, a channel decoding block and the like. The short range communication transceiver 502 may communicate via a variety of short range communication protocols or systems, including Bluetooth, Near Field Communications (NFC), Infra-Red (IR) communications, Radio Frequency Identification (RFID) communication, Specialized Mobile Radio (SMR) communications, or other suitable short range communication systems. However, the present invention is not limited thereto, and communication systems or devices having larger than short range communication abilities may be used.

The RF processing block converts a signal in the millimeter wave band received through the antenna system into a baseband signal. The demodulation block may be comprised of an FFT operator for extracting data placed on one or more subcarriers of the signal received from the RF processing block and the like. The channel decoding block may comprise a demodulator, a deinterleaver, a channel decoder and the like. The transmitter converts a baseband signal into a signal in the millimeter wave band and transmits the signal in the millimeter wave band through an antenna system. For example, the transmitter may include a channel encoding block, a modulation block and an RF processing block.

The channel encoding block may include a channel encoder, an interleaver, a modulator and the like. The modulation block may comprise an IFFT operator for placing transmitted data on a plurality of orthogonal subcarriers and the like. In an OFDM system, the modulation block may comprise the IFFT operator. In a CDMA system, the IFFT operator may be replaced with a code spreading modulator and the like. The RF processing block converts a baseband signal received from the modulation block into a signal in the millimeter wave band and outputs the signal in the millimeter wave band through the antenna system.

The controller 504 controls overall operations of the mobile terminal 500. The operations of the mobile terminal 500 include any of the operations explicitly or implicitly described above as being performed by a mobile terminal. In addition, the controller 504 generates data to be transmitted and process data to be received. The controller 504 controls the generation of the DTMF tones used to transmit the user's private information stored in the memory 503.

The memory 503 stores programs used by controller 504 for the operations of the mobile terminal 500 and various data including any of the information and/or algorithms discussed herein as being received, transmitted, stored, retained or used by a mobile terminal, such as the user's private information.

FIG. 5B is a block diagram illustrating a memory of the mobile terminal of FIG. 4 according to an exemplary embodiment of the present invention.

Referring to FIG. 5B, the memory 503 includes a secure storage area 505 to store a user's private information, such as credit card numbers, a social security number, a home address, a date of birth, a bank account number or other similar private information. Access to the secure storage area 505 may be restricted by encryption, a password, biometric security, or other suitable and strong security measures. As shown in FIG. 5B, the secure storage area 505 is included as a part of the memory 503. However, the present invention is not limited thereto, and the secure storage area 505 may be a separate element from the memory 503 and may be physically separate from the memory 503. Additionally, the secure storage area 505 may be an external or a detachable memory such as a memory connected via a Universal Serial Bus (USB) or a Near-Field Communications (NFC) connection, a Subscriber Identity Module (SIM) card, a Secure Digital (SD) card or other suitable storage devices.

In order to access the secure storage area 505 a user of the mobile terminal 500 is authenticated by the password, the biometric security, or the other suitable and strong security measures discussed above. The user of the mobile terminal 500 may access, edit, add, delete or perform other similar data manipulation operations on the private information stored in the mobile terminal after being authenticated. Additionally, data stored in the secure storage area 505 may be pre-populated by the user typing in or recording via a microphone of the mobile terminal 500 the data that is the private information. Additionally, the secure storage area 505 may be extemporaneously populated with the private information by capturing the user's inputs or voice during a voice or data call on the mobile terminal 500.

Furthermore, read and write operations to the secure storage area 505 may be controlled in a manner to restrict a source of a write operation and a destination of a read operation. In other words, one or more fields of data in the secure storage area may be controlled so as to be transmitted to predetermined network locations or to be used by predetermined applications. For example, the user may restrict credit card information to be sent to only a specified pizza vendor's online store, a group of predetermined retail vendors, or to be only used by a mobile terminal application through with the user purchases mobile terminal applications. Accordingly, while the user is performing a voice or data call including transmission of corresponding private information from among all of the private information stored in the secure storage area 505, only the corresponding private information may be transmitted due to a remaining amount of the private information being restricted from being transmitted. Thus, transmission of all of the private information is prevented.

During an execution of a phone call using the mobile terminal according to exemplary embodiments of the present invention, the user, at a transmitting end of the phone call, may elect to transmit the user's private information to another user or terminal at a receiving end of the phone call. In such a case, the user at the transmitting end unlocks the secure storage area 505 by being authenticated. The user at the transmitting end may choose to transmit the user's private information to the other user at the receiving end. The user's private information is only transmitted to the receiving end in order to prevent eavesdropping of the user's private information. In other words, the user at the transmitting end may hear a description of the user's private information that is being transmitted to the other user at the receiving end, but does not hear or see the user's private information in order to protect the user's private information from being eavesdropped at the transmitting end of the phone call.

Certain aspects of the present invention can also be embodied as computer readable code on a computer readable recording medium. A computer readable recording medium is any data storage device that can store data which can be thereafter read by a computer system. Examples of the computer readable recording medium include Read-Only Memory (ROM), Random-Access Memory (RAM), CD-ROMs, magnetic tapes, floppy disks, optical data storage devices, internal or external magnetic or solid state storage devices or other suitable storage devices. The computer readable recording medium can also be distributed over network coupled computer systems or over network coupled mobile terminals or other network coupled wireless devices so that the computer readable code is stored and executed in a distributed fashion. Also, functional programs, code, and code segments for accomplishing the present invention can be easily construed by programmers skilled in the art to which the present invention pertains.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A mobile terminal for securely storing private information, the mobile terminal comprising:
a cellular band transceiver for transmitting and receiving radio signals in a cellular band;
a memory for storing programs used by controller for the controlling of the operations of the mobile terminal and data including the private information; and
a controller for controlling operations of the mobile terminal and controlling a transmission of the private information to be transmitted to a receiving end of a voice or a data call executed by the mobile terminal.
and wherein the memory comprising:
a secure storage area for storing the private information; and
a non-secure storage area for storing the non-private information.

2. The mobile terminal of claim 1, wherein the secure storage area comprises encrypted data,
and wherein the secure storage area is physically separated from the non-secure storage area and the secure storage area is accessible to an authenticated user and the authenticated user is a user who has provided a correct password or correct biometric information to the mobile terminal,
and wherein the secure storage area is removeably attached to the mobile terminal,

3. The mobile terminal of claim 1, wherein the controller transmits the private information using Dual-Tone Multi-Frequency (DTMF) tones transmitted over a voice channel of the mobile terminal.

4. The mobile terminal of claim 1, wherein the controller transmits predetermined fields of the private information to predetermined network destinations, and,
wherein the predetermined fields comprise different types of the private information,
and wherein the predetermined network destinations are provided to the mobile terminal in a database,
and wherein the database is generated by a user corresponding to the private information stored on the mobile terminal,
and wherein the database correlates the predetermined network destinations to predetermined fields of the private information.

5. A method for securely storing and transmitting private information on a mobile terminal, the method comprising:
initiating a voice call on the mobile terminal;
determining whether the voice call includes transmission of the private information;
locating the private information in a secured memory location; and
authenticating a user initiating the voice call including the transmission of the private information.

6. The method of claim 5, further comprising transmitting the private information if the user initiating the voice call is authenticated.

7. The method of claim 6, wherein the transmitting of the private information comprises transmitting the private information as Dual-Tone Multi-Frequency (DTMF) tones.

8. The method of claim 6, wherein the transmitting of the private data comprises transmitting a predetermined field of the private information to a predetermined recipient,
and wherein the transmitting of the private information comprises transmitting the private information as encrypted data,
and wherein the predetermined field and the predetermined recipient are provided by the user corresponding to the private information.

9. The method of claim 6, wherein the private information comprises at least one of a social security number, a home address, a credit card number and a bank account number.

10. The method of claim 5 further comprising determining whether the user elects to transmit the private information in the operation.

11. The method of claim 5, wherein the authenticating of the user comprises prompting the user to provide a password or biometric information.

12. A method for securely transmitting a user's private information from a mobile terminal to another party, the method comprising:
initiating a voice call on the mobile terminal;
authenticating the user transmitting the user's private information;
determining whether the user's private information is transmittable to the other party by the authenticated user; and
transmitting the user's private information to the other party.

13. The method of claim 12, wherein the authenticating of the user comprises incrementing an authentication attempt counter if the authenticating of the user fails; and
reattempting the authentication of the user if the authentication attempt counter is less than a predetermined authentication attempt threshold.

14. The method of claim 12, wherein the determining of whether the user's private information is transmittable to the other party comprises:
selecting at least one item of the user's private information; and
determining whether the at least one item of the user's private information is allowed to be transmitted to the other party.

15. The method of claim 12, wherein transmitting the user's private information to the other party comprises:
determining whether the user's private information is to be transmitted as recorded audio, Dual-Tone Multi-Frequency (DTMF) tones or synthesized speech; and
describing the transmission of the user's private information to the user.

16. The method of claim 12, wherein the content of the user's private information is not audibly or visually conveyed to the user during the describing of the transmission of the user's private information.

17. The method of claim 12, wherein the user's private information comprises at least one of a social security number, a home address, a credit card number and a bank account number.

18. The method of claim 12, wherein the authenticating of the user comprises prompting the user to provide a password or biometric information.
